# FASCICULE DE BREVET EUROPEEN

(11) **EP 3 667 438 B1**
(45) Date de publication et mention de la délivrance du brevet: **28.12.2022**
(21) Numéro de dépôt: 19206101.8
(22) Date de dépôt: 30.10.2019
(51) Int. Cl.: G05B 9/03, B64C 13/18, B64C 13/42, B64C 13/50

(54) **SYSTÈME DE COMMANDE DE VOL D'UN AÉRONEF**
FLUGSTEUERUNGSSYSTEM EINES LUFTFAHRZEUGS
SYSTEM FOR FLIGHT CONTROL OF AN AIRCRAFT

(30) Priorité: 26.11.2018 FR 1871824
(43) Date de publication de la demande: 17.06.2020
(73) Titulaire: AIRBUS OPERATIONS (S.A.S.), 31060 Toulouse (FR)
(72) Inventeur: FERVEL, Marc, 31060 TOULOUSE Cedex 9 (FR)
(74) Mandataire: Sarraméa, Claude

(56) Documents cités:
- FR-A1- 2 943 036
- FR-A1- 3 047 274
- US-A1- 2017 081 019

## Description

L'invention est relative à un système de commandes de vol d'un aéronef, prévu pour contrôler notamment des gouvernes de l'aéronef. Les aéronefs modernes, en particulier les avions de transport, comportent un ensemble de calculateurs de commande de vol qui calculent des ordres de contrôle d'actionneurs de gouvernes de l'aéronef. Ces gouvernes sont par exemple des volets ou des ailerons situés au niveau des ailes de l'aéronef, des gouvernes de profondeur situées par exemple sur un plan horizontal à l'arrière de l'aéronef, une gouverne de direction située sur la dérive, etc. Les calculateurs de commande de vol sont dissimilaires et redondants de telle façon que le système de commande de vol soit robuste à des pannes susceptibles d'affecter certains calculateurs. De plus, généralement, une partie des calculateurs sont utilisés en mode commande (COM) et les autres calculateurs sont utilisés en mode moniteur (MON), un calculateur en mode moniteur surveillant le fonctionnement d'un calculateur en mode commande. Les calculateurs sont ainsi répartis selon des couples COM/MON. En plus des calculateurs de commande de vol, l'aéronef comporte également des calculateurs dédiés à la commande des becs et des volets (« SLATS and FLAPS » en anglais), par exemple de type SFCC (« Slat Flap Control Computer » en anglais), des calculateurs de contrôle du freinage et du guidage au sol de l'aéronef, par exemple de type BSCS (« Braking and Steering Control System » en anglais) et des calculateurs mettant en œuvre une fonction de contrôle de haut niveau des moteurs de propulsion de l'aéronef, par exemple de type EIF (« Engine Interface Function » en anglais), cette fonction étant interfacée avec des contrôleurs associés aux moteurs de propulsion, par exemple de type EEC (« Electronic Engine contrôler » en anglais) ou de type FADEC (« Full Authority Digital Engine Contrôler » en anglais).

Le document FR2943036 décrit un système de commandes de vol selon l'art antérieur. Ce système de commande de vol comprend un ensemble de calculateurs primaires, un ensemble de calculateurs secondaires et un calculateur de secours. Chacun des calculateurs primaires et secondaires correspond à un couple COM/MON. A l'intérieur d'un couple COM/MON, lorsque le module MON détecte une défaillance du module COM, le module MON désactive le calculateur correspondant à ce couple COM/MON et un autre calculateur primaire ou secondaire est activé à sa place. Ainsi, en l'absence de défaillance, les actionneurs de gouvernes sont contrôlés par des calculateurs primaires. En cas de défaillance des calculateurs primaires, le contrôle des actionneurs de gouvernes est réalisé par des calculateurs secondaires. En cas de défaillance de l'ensemble des calculateurs secondaires, les actionneurs de gouvernes sont contrôlés par le calculateur de secours selon des lois très basiques de façon à être robustes. Le calculateur de secours n'est généralement utilisé que pendant le temps nécessaire pour réinitialiser les calculateurs primaires et secondaires. Les calculateurs primaires permettent un contrôle de l'aéronef aussi bien en mode manuel, à partir d'organes de pilotage (manche, palonnier, etc.) situés dans le cockpit, qu'en mode de pilotage automatique. Afin d'offrir une meilleure disponibilité que les calculateurs primaires, les calculateurs secondaires correspondent à un mode de commande plus robuste que le mode nominal des calculateurs primaires. Pour cela, les calculateurs secondaires mettent en œuvre des lois de commandes des gouvernes simplifiées par rapport aux lois des calculateurs primaires. Il en résulte que les lois de pilotage automatique, du fait de leur complexité, ne peuvent pas être implémentées dans les calculateurs secondaires. Les calculateurs secondaires ne permettent donc qu'un contrôle de l'aéronef en mode manuel. Or, sur les nouvelles générations d'aéronefs, il est souhaitable d'améliorer la disponibilité du mode de pilotage automatique. De plus, pour des aéronefs de type avion autonome ou drone, il est nécessaire que la probabilité de perte de la disponibilité des lois de pilotage automatique soit extrêmement faible, par exemple inférieure à 1 × 10⁻⁹ par heure de vol. Il existe donc un besoin d'un système de commande de vol permettant de répondre à ce problème sans augmenter le nombre de calculateurs dudit système de commande de vol afin de ne pas complexifier ce système et de ne pas pénaliser la masse de l'aéronef.

Le document US2017/081019 A1 décrit un autre système de commandes de vol selon l'art antérieur, dans lequel les calculateurs de commandes de vol FCC1, FCC2, FCC3 n'intègrent que des lois de commande manuelles et pas les lois de pilotage automatique. Ainsi, le système de commandes de vol comporte en outre un calculateur spécifique Autopilot 70 en charge du pilote automatique, ce qui complexifie ce système.

### EXPOSE DE L'INVENTION :

La présente invention a notamment pour but d'apporter une solution à ce besoin. Elle concerne un système de commande de vol d'un aéronef selon la revendication 1.

Ainsi, grâce à ce système de commande de vol, étant donné que tous les calculateurs principaux sont configurés pour mettre en œuvre des lois de pilotage automatique, le mode de pilotage automatique est disponible en permanence pendant l'exploitation normale de l'aéronef. Le pilote de l'aéronef est ainsi déchargé de la surveillance du fonctionnement du pilote automatique. Le fait d'utiliser des calculateurs principaux de deux types matériels permet d'éviter un mode de panne commun à l'ensemble desdits calculateurs principaux. Le fait que les calculateurs principaux du premier type matériel soient configurés pour contrôler les actionneurs selon un premier niveau de tolérance et que les calculateurs principaux du deuxième type matériel soient configurés pour contrôler les actionneurs selon un deuxième niveau de tolérance moins strict que le premier niveau de tolérance permet un contrôle des actionneurs par les calculateurs principaux du premier type matériel avec un niveau de précision élevé lorsque ces calculateurs principaux du premier type matériel sont opérationnels. En cas de défaillance des calculateurs principaux du premier type matériel, les calculateurs principaux du deuxième type matériel permettent un contrôle des actionneurs avec un niveau de précision moins élevé, du fait du niveau de tolérance moins strict. En contrepartie, ce niveau de tolérance moins strict permet d'améliorer la disponibilité desdits calculateurs principaux du deuxième type matériel. Cette amélioration de la disponibilité opérationnelle des calculateurs principaux contribue à permettre la mise en œuvre des lois de pilotage automatique dans l'ensemble des calculateurs principaux, cela en utilisant un nombre restreint de calculateurs. Dans les calculateurs principaux du deuxième type matériel, le risque de défaillance dû à la complexité des lois de pilotage automatique est amoindri par l'utilisation d'un niveau de tolérance moins strict que le premier niveau de tolérance utilisé dans les calculateurs principaux du premier type matériel.

Pour un calculateur principal, la notion précitée de niveau de tolérance correspond à un écart autorisé entre d'une part des ordres déterminés par le module agissant en mode commande (COM) et d'autre part des ordres correspondants déterminés par le module agissant en mode moniteur (MON). Tant que l'écart entre les ordres déterminés respectivement par le module agissant en mode commande et par le module agissant en mode moniteur est inférieur à cet écart autorisé, le module agissant en mode moniteur (MON) ne détecte pas d'erreur et le calculateur principal reste opérationnel. Lorsque cet écart est supérieur à l'écart autorisé, le module agissant en mode moniteur (MON) détecte une défaillance du calculateur.

Dans un mode avantageux de réalisation :
- chacun des calculateurs principaux comporte au moins une première partition logicielle et une deuxième partition logicielle, la première partition logicielle comprenant des fonctions de pilotage automatique de l'aéronef et la deuxième partition logicielle comprenant des fonctions de commande d'actionneurs de l'ensemble d'actionneurs ; et
- pour chacun des calculateurs principaux, le module (MON) agissant en mode moniteur est configuré pour surveiller le module (COM) agissant en mode commande de façon indépendante pour chacune des partitions, afin de permettre la désactivation des partitions de façon indépendante les unes des autres.

Ainsi, les lois de pilotage automatique et les fonctions de commande des actionneurs sont isolées les unes des autres dans des partitions distinctes. Etant donné que la surveillance de type COM/MON est réalisée de façon indépendante pour chacune des partitions, les différentes partitions d'un calculateur principal peuvent être désactivées de façon indépendante les unes des autres. En particulier, en cas de détection d'une défaillance de la partition relative aux lois de pilotage, seule cette partition est désactivée dans le calculateur principal considéré : ce calculateur continue à être opérationnel pour les fonctions de commande des actionneurs et les lois de pilotage automatique sont alors mises en œuvre par un autre calculateur principal. La partition relative aux lois de pilotage automatique, dans laquelle est intervenue la défaillance, peut être réinitialisée de façon indépendante de la ou des autres partitions du calculateur principal considéré, de façon à être à nouveau disponible si nécessaire. Par conséquent, ce mode avantageux de réalisation contribue encore à permettre la disponibilité des lois de pilotage automatique dans l'ensemble des calculateurs principaux, puisque d'une part les lois de pilotage automatique sont mises en œuvre par chacun des calculateurs principaux et d'autre part une défaillance dans un des calculateurs principaux, qui pourrait résulter de la complexité desdites lois de pilotage automatique, n'aurait aucune conséquence sur l'exécution des fonctions de commande des actionneurs.

Selon des modes particuliers de réalisation pouvant être pris en compte isolément ou en combinaison :
- les différents calculateurs de l'ensemble de calculateurs principaux correspondent à des calculateurs modulaires ;
- l'ensemble d'actionneurs inclut au moins l'un des sous-ensembles d'actionneurs suivants :
   - un sous-ensemble d'actionneurs de gouvernes de contrôle primaire du vol de l'aéronef ;
   - un sous-ensemble d'actionneurs comprenant les actionneurs des becs et/ou des volets de l'aéronef ;
   - un sous-ensemble d'actionneurs prévus pour assurer le contrôle du freinage et du guidage au sol de l'aéronef ;
   - un sous-ensemble d'actionneurs correspondant aux moteurs de propulsion de l'aéronef.

De façon avantageuse, chacun des calculateurs principaux comporte une partition logicielle distincte associée à chaque sous-ensemble d'actionneurs et le module agissant en mode moniteur est configuré pour surveiller le module agissant en mode commande de façon indépendante pour chacune des partitions, afin de permettre la désactivation des partitions de façon indépendante les unes des autres ;
- un premier des deux calculateurs du premier type matériel et un premier des deux calculateurs du deuxième type matériel sont alimentés par une première alimentation électrique et un deuxième des deux calculateurs du premier type matériel et un deuxième des deux calculateurs du deuxième type matériel sont alimentés par une deuxième alimentation électrique indépendante de la première alimentation électrique ;
- un premier des deux calculateurs du premier type matériel et un premier des deux calculateurs du deuxième type matériel sont configurés pour commander un premier sous-ensemble d'actionneurs de l'ensemble d'actionneurs et un deuxième des deux calculateurs du premier type matériel et un deuxième des deux calculateurs du deuxième type matériel sont configurés pour commander un deuxième sous-ensemble d'actionneurs de l'ensemble d'actionneurs, disjoint du premier sous-ensemble d'actionneurs. De façon particulière, les actionneurs de l'ensemble d'actionneurs sont répartis entre le premier sous-ensemble d'actionneurs et le deuxième sous-ensemble d'actionneurs de telle façon que pour une gouverne de l'aéronef appartenant à un sous-ensemble de gouvernes dites critiques, un premier actionneur associé à cette gouverne fait partie du premier sous-ensemble d'actionneurs et un deuxième actionneur associé à cette gouverne fait partie du deuxième sous-ensemble d'actionneurs. De façon avantageuse, les différents actionneurs de l'ensemble d'actionneurs sont répartis entre le premier sous-ensemble d'actionneurs et le deuxième sous-ensemble d'actionneurs de telle façon que les actionneurs du premier sous-ensemble d'actionneurs permettent à eux seuls un contrôle du vol de l'aéronef et les actionneurs du deuxième sous-ensemble d'actionneurs permettent à eux seuls un contrôle du vol de l'aéronef ;
- le système de commande de vol comprend en outre :
   - un ensemble de contrôleurs d'actionneurs ; et
   - deux réseaux de communication indépendants et dissimilaires,
      et chaque actionneur de l'ensemble d'actionneurs est commandé par un contrôleur d'actionneurs de l'ensemble de contrôleurs d'actionneurs, chacun des calculateurs principaux est relié à chacun des deux réseaux de communication et chacun des contrôleurs d'actionneurs est relié à chacun des deux réseaux de communication. De façon particulière, chacun des deux réseaux de communication comprenant un ensemble d'équipements de communication requérant une alimentation électrique pour leur fonctionnement, une première partie des équipements de communication de chaque réseau de communication est alimentée par une première alimentation électrique et une deuxième partie des équipements de communication de chaque réseau de communication est alimentée par une deuxième alimentation électrique indépendante de la première alimentation électrique ;
- l'ensemble de calculateurs principaux comprend uniquement lesdits deux calculateurs du premier type matériel et lesdits deux calculateurs du deuxième type matériel.
- pour chaque calculateur de l'ensemble de calculateurs principaux, les deux modules agissant respectivement en mode commande (COM) et en mode moniteur (MON) sont des modules similaires, tant du point de vue matériel que du point de vue logiciel.

L'invention est également relative à un aéronef comportant un système de commande de vol tel que précité.

### DESCRIPTION DETAILLEE :

L'invention sera mieux comprise à la lecture de la description qui suit et à l'examen des figures annexées.
La figure 1 représente un aéronef comportant un système de commande de vol.
La figure 2 représente de façon schématique un système de commande de vol conforme à un mode de réalisation de l'invention.
La figure 3 illustre de façon schématique un calculateur principal d'un système de commande de vol, conforme à un mode de réalisation de l'invention.
La figure 4 illustre une première variante d'un système de commande de vol conforme à un mode de réalisation de l'invention.
La figure 5 illustre une deuxième variante d'un système de commande de vol conforme à un mode de réalisation de l'invention.

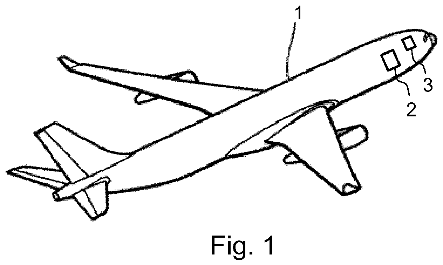

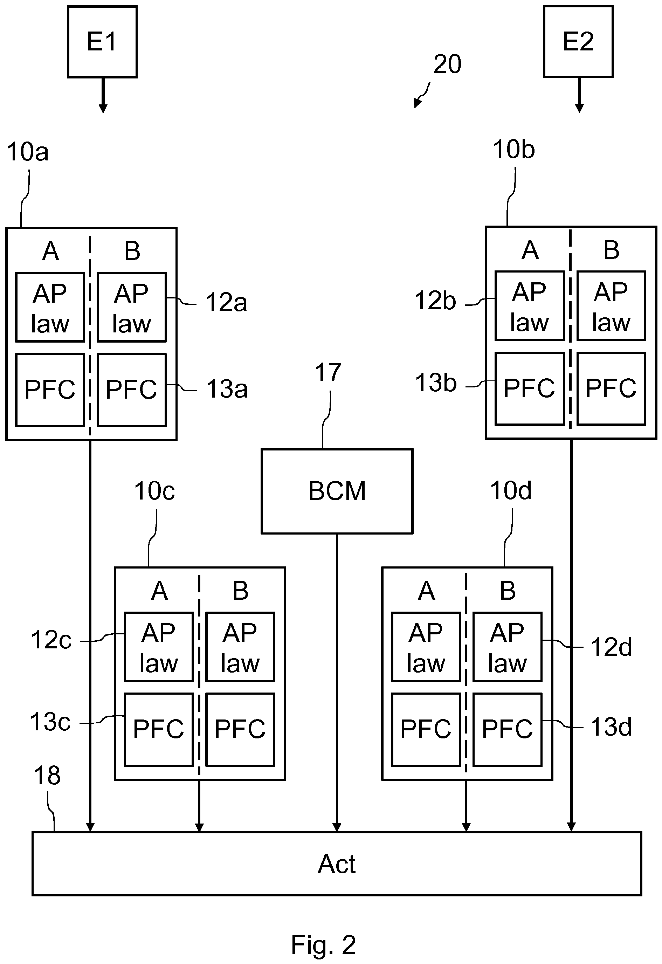

L'aéronef 1 représenté sur la figure 1 comporte un système de commande de vol tel que le système de commande de vol 20 représenté sur la figure 2. Ce système de commande de vol comprend un ensemble de calculateurs de commande de vol et un ensemble d'actionneurs 18 de contrôle de l'aéronef, libellés Act sur la figure. L'ensemble de calculateurs de commande de vol est constitué uniquement d'un ensemble de calculateurs dits principaux 10a, 10b, 10c, 10d et d'au moins un calculateur de secours 17 (libellé BCM sur la figure, pour « Backup Control Module » en anglais). Ces calculateurs sont par exemple situés dans une baie avionique 2 de l'aéronef, à proximité du cockpit 3. Chacun des calculateurs principaux est de type duplex, c'est-à-dire qu'il comprend deux modules similaires, libellés voie A et voie B sur la figure. Chaque fonction mise en œuvre par le calculateur principal est dupliquée sur chacune des voies A et B, l'une des voies agissant en mode commande (COM) et l'autre en mode moniteur (MON). Cela permet de réaliser une surveillance dite de type COM/MON au cours de laquelle, pour chaque fonction mise en œuvre par le calculateur principal, la voie agissant en mode moniteur surveille la voie agissant en mode commande de façon à détecter une éventuelle défaillance du couple de voies A et B. Selon une première alternative, pour toutes les fonctions mises en œuvre par le calculateur principal, la voie A agit en mode COM et la voie B en mode MON. Selon une deuxième alternative, pour toutes les fonctions mises en œuvre par le calculateur principal, la voie B agit en mode COM et la voie A en mode MON. Selon une troisième alternative, pour une première partie des fonctions mises en œuvre par le calculateur principal, la voie A agit en mode COM et la voie B en mode MON et pour une deuxième partie (complémentaire de la première partie) des fonctions mises en œuvre par le calculateur principal, la voie B agit en mode COM et la voie A en mode MON, ce qui permet de mieux répartir la charge des processeurs des voies A et B. Tous les calculateurs principaux sont configurés pour mettre en œuvre des lois de pilotage automatique de l'aéronef, libellées APlaw sur la figure. L'ensemble de calculateurs principaux comprend deux calculateurs 10a, 10b d'un premier type matériel. Ces calculateurs du premier type matériel sont configurés pour contrôler des actionneurs de l'ensemble d'actionneurs 18 selon un premier niveau de tolérance. L'ensemble de calculateurs principaux comprend également deux calculateurs 10c, 10d d'un deuxième type matériel, dissimilaire du premier type matériel. Ces calculateurs du deuxième type matériel sont configurés pour contrôler des actionneurs de l'ensemble d'actionneurs 18 selon un deuxième niveau de tolérance, moins strict que le premier niveau de tolérance. Pour un calculateur principal, le niveau de tolérance correspond à un écart autorisé entre d'une part des ordres déterminés par le module COM agissant en mode commande (par exemple la voie A) et d'autre part des ordres correspondants déterminés par le module MON agissant en mode moniteur (par exemple la voie B). Les ordres considérés peuvent être aussi bien des ordres de commande des actionneurs que des ordres correspondant à des calculs intermédiaires, par exemple des sorties de lois de commande. L'écart autorisé peut être différent selon les ordres considérés : ainsi, par exemple, les écarts autorisés peuvent être différents pour une gouverne de direction de l'aéronef et pour un aileron de l'aéronef. L'écart autorisé peut encore être différent pour une sortie de loi de commande, par exemple une loi de commande qui calcule un angle d'incidence souhaité pour l'aéronef. Le fait que le deuxième niveau de tolérance soit moins strict que le premier niveau de tolérance signifie que, pour un ordre donné, l'écart autorisé pour cet ordre dans les calculateurs 10c, 10d du deuxième type est supérieur à l'écart autorisé pour cet ordre dans les calculateurs 10a, 10b du premier type. Dans un calculateur, lorsque l'écart entre un ordre déterminé par le module COM et un ordre correspondant déterminé par le module MON est supérieur à l'écart autorisé pour cet ordre, la surveillance COM/MON détecte une défaillance dudit calculateur.

Etant donné que les calculateurs principaux du premier type matériel sont configurés pour contrôler les actionneurs selon un premier niveau de tolérance et que les calculateurs principaux du deuxième type matériel sont configurés pour contrôler les actionneurs selon un deuxième niveau de tolérance moins strict que le premier niveau de tolérance, de façon nominale les actionneurs sont contrôlés par les calculateurs principaux du premier type matériel avec un niveau de précision élevé lorsque ces calculateurs principaux du premier type matériel sont opérationnels. Cela permet de détecter très rapidement un ordre erroné. En cas de défaillance des calculateurs principaux du premier type matériel (due par exemple à un dépassement du seuil d'erreur autorisé, ayant entraîné un déclenchement de la surveillance COM/MON), les calculateurs principaux du deuxième type matériel permettent un contrôle des actionneurs avec un niveau de précision moins élevé, du fait du niveau de tolérance moins strict. En contrepartie, ce niveau de tolérance moins strict permet d'améliorer la disponibilité desdits calculateurs principaux du deuxième type matériel et donc la robustesse du contrôle, puisque dans les calculateurs principaux du deuxième type matériel, le risque de défaillance dû à la complexité des lois de pilotage automatique est amoindri par l'utilisation d'un niveau de tolérance moins strict que le premier niveau de tolérance utilisé dans les calculateurs principaux du premier type matériel.

Pour chacun des calculateurs principaux, la synchronisation des voies A et B réalisant la surveillance de type COM/MON est de préférence réalisée avec un temps de synchronisation inférieur à une durée prédéterminée, par exemple 1ms. Il en résulte une rapidité de la synchronisation qui contribue à permettre la mise en œuvre des lois de pilotage automatique de façon robuste dans l'ensemble des calculateurs principaux. En effet, la rapidité de la synchronisation permet d'éviter des déclenchements intempestifs de la surveillance COM/MON, d'où une plus grande robustesse de ladite surveillance. Cela permet également une plus grande rapidité de détection en cas de divergence entre les voies A et B (correspondant à une défaillance) pour la mise en œuvre d'une fonction du calculateur principal.

Pour assurer le contrôle des actionneurs, chacun des calculateurs principaux est relié de façon usuelle à un ensemble de capteurs de l'aéronef. Ces capteurs fournissent des mesures de paramètres de l'aéronef (vitesse, altitude, température, etc.), de position des actionneurs et/ou de gouvernes commandées par ces actionneurs. Ces mesures sont utilisées dans des lois de contrôle mises en œuvre par les calculateurs principaux pour contrôler les actionneurs.

Dans un mode avantageux de réalisation, chacun des calculateurs principaux 10a, 10b, 10c, 10d comporte au moins une première partition logicielle et une deuxième partition logicielle pour chacune des voies A et B utilisées pour la surveillance COM/MON. La première partition 12a, 12b, 12c, 12d comprend des fonctions de pilotage automatique de l'aéronef prévues pour mettre en œuvre les lois de pilotage automatique de l'aéronef, libellées APlaw sur la figure. La deuxième partition 13a, 13b, 13c, 13d comprend des fonctions de commande d'actionneurs de l'ensemble d'actionneurs 18. Ces actionneurs sont par exemple des actionneurs d'au moins une partie des gouvernes de contrôle primaire du vol de l'aéronef (d'où le libellé PFC pour « Primary Flight Control » en anglais, sur la figure). Le terme gouvernes de contrôle primaire du vol de l'aéronef désigne ici des gouvernes de l'aéronef indispensables au contrôle du vol, notamment la dérive, les gouvernes de profondeur, le plan horizontal réglable, les ailerons et les déporteurs (« spoilers » en anglais). De façon avantageuse, la première partition 12a, 12b, 12c, 12d comprend aussi des lois de pilotage manuel de l'aéronef. Pour chacun des calculateurs principaux 10a, 10b, 10c, 10d, la surveillance COM/MON est réalisée de façon indépendante pour chacune des partitions, respectivement 12a et 13a, 12b et 13b, 12c et 13c, 12d et 13d, afin de permettre la désactivation des partitions du calculateur principal de façon indépendante les unes des autres. Aussi bien les lois de pilotage automatique que les fonctions de commande d'actionneurs correspondent à des fonctions critiques de l'aéronef pour lesquelles le niveau d'assurance qualité requis est dit de type DAL-A, correspondant au niveau d'assurance qualité le plus élevé. L'utilisation de partitions pour mettre en œuvre ces fonctions ayant un niveau d'assurance qualité DAL-A est innovant, d'autant plus que les fonctions de commande d'actionneurs utilisent des boucles de commande rapides (de l'ordre par exemple de 1ms) au cours desquelles des informations issues de capteurs sont acquises avec des temps de latence courts et avec une précision élevée d'acquisition des valeurs mesurées par ces capteurs. Pour cela, chaque calculateur principal 10a, 10b, 10c, 10d mettant en œuvre ces partitions est conformé de façon à garantir le déterminisme des temps d'exécution des logiciels utilisés dans lesdites partitions.

L'utilisation de partitions contribue à permettre la mise en œuvre des lois de pilotage automatique dans l'ensemble des calculateurs principaux 10a, 10b, 10c, 10d. En effet, du fait de la complexité des lois de pilotage automatique, la probabilité de détection, par la surveillance COM/MON, d'une défaillance de la partition 12a, 12b, 12c, 12d correspondant à ces lois est plus élevée que la probabilité de détection d'une défaillance de la partition 13a, 13b, 13c, 13d comprenant des fonctions de commande d'actionneurs. La surveillance et la désactivation étant réalisées de façon indépendante pour les différentes partitions, respectivement 12a et 13a, 12b et 13b, 12c et 13c, 12d et 13d, une défaillance détectée dans une partition d'un calculateur principal entraîne seulement la désactivation de ladite partition et n'a aucune conséquence pour l'autre ou les autres partitions dudit calculateur principal. Par exemple, lorsque des lois de pilotage automatique de l'aéronef sont mises en œuvre par la partition 12a de la voie A du calculateur principal 10a agissant en mode commande (COM), ladite mise en œuvre des lois de pilotage dans la partition 12a de la voie A est surveillée par la partition 12a correspondante de la voie B dudit calculateur primaire 10a agissant en mode surveillance (MON). Si une défaillance est détectée, la surveillance COM/MON désactive uniquement la partition 12a dudit calculateur 10a et les lois de pilotage automatique sont alors mises en œuvre par l'une des partitions 12b, 12c, 12d des autres calculateurs principaux 10b, 10c, 10d qui devient alors active. De préférence, la partition 12a est alors réinitialisée (de façon indépendante de l'autre ou des autres partitions 13a du calculateur principal 10a) de façon à être à nouveau disponible si nécessaire. Cette désactivation de la partition 12a est sans effet sur la partition 13a du calculateur principal 10a qui peut rester active si elle était active lors de la défaillance intervenue dans la partition 12a. De façon réciproque, une défaillance dans la partition 13a est sans effet sur la partition 12a.

Le contrôle des actionneurs par les fonctions de commande d'actionneurs des deuxièmes partitions 13a, 13b, 13c, 13d des calculateurs principaux 10a, 10b, 10c, 10d est réalisé selon le premier niveau de tolérance dans les partitions 13a et 13b des calculateurs 10a et 10b du premier type matériel et selon le deuxième niveau de tolérance, moins strict que le premier niveau de tolérance, dans les partitions 13c et 13d des calculateurs 10c et 10d du deuxième type matériel.

Dans un mode particulier de réalisation, un premier calculateur primaire 10a du premier type matériel et un premier calculateur primaire 10c du deuxième type matériel sont alimentés par une première alimentation électrique E1 et un deuxième calculateur primaire 10b du premier type matériel et un deuxième calculateur primaire 10d du deuxième type matériel sont alimentés par une deuxième alimentation électrique E2, comme représenté sur la figure 2. Ainsi, en cas de panne d'une des alimentations électriques E1 et E2, au moins un calculateur primaire du premier type matériel (10a ou 10b) et au moins un calculateur primaire du deuxième type matériel (10c ou 10d) restent alimentés électriquement et peuvent ainsi contrôler les actionneurs qui leurs sont reliés. Les deux alimentations électriques E1 et E2 sont par exemple des générateurs entraînés chacun par un moteur différent de propulsion de l'aéronef. Ainsi, en cas de panne d'un moteur, au moins l'une des alimentations E1 et E2 reste fonctionnelle. Le calculateur de secours 17 est de préférence alimenté par une alimentation électrique indépendante de E1 et E2, par exemple une alimentation électrique secourue par batterie.

Les calculateurs de commande de vol ont typiquement un taux de panne de l'ordre de 1 × 10⁻⁴ à 1 × 10⁻⁵ par heure de vol. Les règlementations en vigueur imposent qu'un système de commande de vol permette de contrôler l'aéronef avec une probabilité de panne catastrophique inférieure à 1 × 10⁻⁹ par heure de vol. L'utilisation de trois calculateurs de commande de vol redondants permet donc de satisfaire ces réglementations. Par conséquent, le système 20 de commande de vol conforme à l'invention, qui comporte quatre calculateurs principaux redondants, permet de satisfaire les réglementations en vigueur. Il permet même le décollage de l'aéronef avec un calculateur principal en panne (départ dit sous MEL pour « Minimum Equipment List » en anglais) puisqu'il reste alors trois calculateurs principaux opérationnels. Le système 20 de commande de vol permet ainsi de satisfaire à la fois les réglementations en vigueur et les exigences opérationnelles des compagnies aériennes, avec un nombre minimal de calculateurs principaux, tout en garantissant la disponibilité permanente des lois de pilotage automatique.

Dans un mode particulier de réalisation, les calculateurs principaux 10a, 10b, 10c, 10d correspondent à des calculateurs modulaires. Cela facilite l'évolutivité du système de commande de vol en permettant par exemple de remplacer une carte processeur d'un calculateur avec une autre carte comprenant un processeur plus récent et plus puissant, d'ajouter facilement de la mémoire dans le calculateur ou de moduler le nombre de cartes d'entrées/sorties pour gérer un nombre plus ou moins élevé d'actionneurs ou de gouvernes en fonction du type de l'aéronef.

Dans un mode de réalisation de l'invention, l'ensemble d'actionneurs 18 inclut au moins l'un des sous-ensembles d'actionneurs suivants :
- un sous-ensemble d'actionneurs de gouvernes de contrôle primaire du vol de l'aéronef ;
- un sous-ensemble d'actionneurs comprenant les actionneurs des becs et/ou des volets de l'aéronef ;
- un sous-ensemble d'actionneurs prévus pour assurer le contrôle du freinage et du guidage au sol de l'aéronef ;
- un sous-ensemble d'actionneurs correspondant aux moteurs de propulsion de l'aéronef.

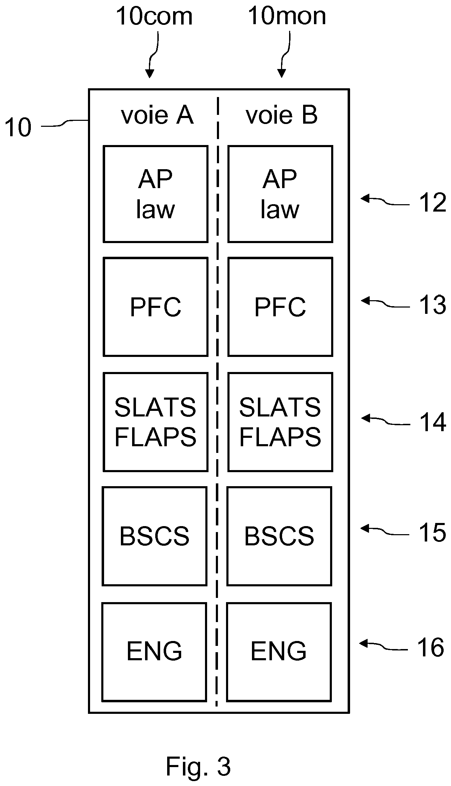

Chaque calculateur principal 10a, 10b, 10c, 10d est alors prévu pour commander tous ces sous-ensembles d'actionneurs de l'ensemble d'actionneurs 18. Le calculateur principal 10 représenté sur la figure 3, correspond à l'un quelconque des calculateurs principaux 10a, 10b, 10c, 10d. Chacune de la voie A 10com et de la voie B 10mon comporte une première partition 12 comprenant les fonctions de pilotage automatique de l'aéronef prévues pour mettre en œuvre les lois de pilotage automatique de l'aéronef et une deuxième partition 13 comprenant des fonctions de commande d'actionneurs, comme indiqué précédemment. De façon avantageuse, la première partition 12 comprend aussi des lois de pilotage manuel de l'aéronef.

Selon une première alternative, la commande des actionneurs des différents sous-ensembles d'actionneurs est mise en œuvre dans la deuxième partition 13.

Selon une deuxième alternative représentée sur la figure 3, le calculateur principal 10 comporte une partition associée à chaque sous-ensemble d'actionneurs. La deuxième partition 13, libellée PFC sur la figure, est associée au sous-ensemble d'actionneurs de gouvernes de contrôle primaire du vol de l'aéronef. Une troisième partition 14 est associée aux actionneurs des becs (« SLATS » en anglais) et/ou des volets (« FLAPS » en anglais). Une quatrième partition 15, libellée BSCS (« Braking and Sterring Control System » en anglais) sur la figure, est associée au sous-ensemble d'actionneurs prévus pour assurer le contrôle du freinage et du guidage au sol de l'aéronef. Une cinquième partition 16, libellée ENG sur la figure, est associée au sous-ensemble d'actionneurs correspondant aux moteurs de propulsion de l'aéronef. Celle des voies A et B agissant en mode moniteur est configurée pour surveiller l'autre des voies A et B agissant en mode commande, de façon indépendante pour chacune des partitions 12, 13, 14, 15 et 16. Cela permet de surveiller une éventuelle défaillance dans une partition et de désactiver cette partition de façon indépendante des autres partitions, comme déjà explicité pour la première partition 12 et la deuxième partition 13.

De façon avantageuse, l'ensemble d'actionneurs 18 comprend tous les sous-ensembles d'actionneurs précités. Le système de commande de vol 20 permet alors de commander toutes les fonctions relatives au vol et au guidage au sol de l'aéronef, tout en garantissant la disponibilité permanente des lois de pilotage automatique. Ainsi, l'ensemble des quatre calculateurs principaux permet de remplacer non seulement les calculateurs primaires et secondaires d'un système de commande de vol selon l'art antérieur, mais aussi les calculateurs dédiés à la commande des becs et des volets (par exemple de type SFCC), les calculateurs de contrôle du freinage et du guidage au sol (par exemple de type BSCS) et la fonction de contrôle de haut niveau des moteurs de propulsion (par exemple de type EIF). Cela permet un important gain de masse et d'encombrement, tout en permettant en plus une disponibilité permanente des lois de pilotage automatique.

De plus, le fait que les calculateurs principaux intègrent la commande de toutes les fonctions relatives au vol et au guidage au sol de l'aéronef permet une simplification des échanges d'informations entre les lois de pilotage automatique, mises en œuvre dans la première partition 12, et les fonctions de commande des actionneurs, mises en œuvre dans les deuxième à cinquième partitions 13 à 16. Ces échanges d'informations sont ainsi réalisés à l'intérieur du système de commande de vol 20, sans nécessiter de communication avec des calculateurs extérieurs à ce système de commande de vol, tels que les calculateurs SFCC, BSCS, ou un calculateur mettant en œuvre la fonction EIF de l'art antérieur. Cela permet en outre une intégration des différentes lois de commande (aussi bien en pilotage automatique qu'en pilotage manuel) de façon centralisée dans les calculateurs principaux 10a, 10b, 10c, 10d, sans avoir besoin de décentraliser des parties de certaines lois de commande dans d'autres calculateurs tels que les calculateurs SFCC, BSCS, ou un calculateur mettant en œuvre la fonction EIF de l'art antérieur. Cela permet de valider ces lois de commande de façon unique dans les calculateurs principaux. Cela évite également de dupliquer des parties desdites lois dans différents calculateurs, parfois fabriqués par plusieurs fournisseurs différents, et de devoir synchroniser l'exécution desdites lois de commande dans ces différents calculateurs. Il en résulte ainsi une simplification du système de commande de vol et de sa conception. La gestion centralisée des lois de pilotage dans les calculateurs principaux permet en outre d'optimiser le contrôle global de l'aéronef, en permettant notamment de meilleures performances de l'aéronef (meilleure précision de guidage, meilleure reconfiguration en cas de panne, etc.).

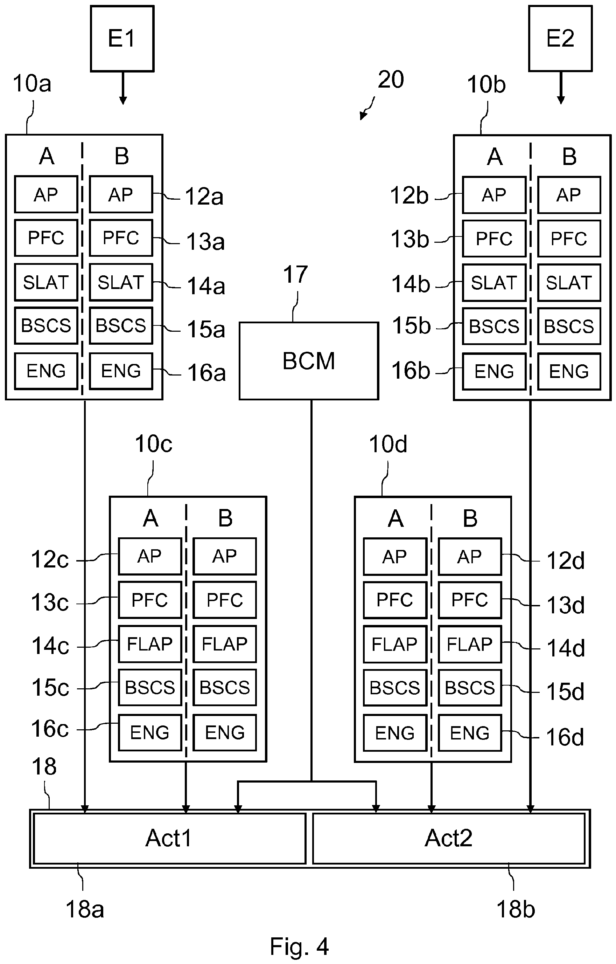

Dans une première variante de réalisation de l'invention, comme représenté sur la figure 4, un premier 10a des deux calculateurs du premier type matériel et un premier 10c des deux calculateurs du deuxième type matériel sont configurés pour commander un premier sous-ensemble d'actionneurs 18a de l'ensemble d'actionneurs et un deuxième 10b des deux calculateurs du premier type matériel et un deuxième 10d des deux calculateurs du deuxième type matériel sont configurés pour commander un deuxième sous-ensemble d'actionneurs 18b de l'ensemble d'actionneurs, disjoint du premier sous-ensemble d'actionneurs. En fonctionnement nominal, le système de commande de vol 20 est configuré de telle façon que le premier calculateur 10a du premier type matériel commande les actionneurs du premier sous-ensemble d'actionneurs 18a et le deuxième calculateur 10b du premier type matériel commande les actionneurs du deuxième sous-ensemble d'actionneurs 18b. Les actionneurs sont ainsi commandés selon le premier niveau de tolérance, lequel permet le contrôle le plus précis desdits actionneurs. En cas de défaillance détectée par la surveillance COM/MON dans une partition 13a, 14a, 15a, 16a en charge de la commande des actionneurs, cette partition est désactivée et la partition correspondante 13c, 14c, 15c, 16c du calculateur 10c est activée. Les actionneurs commandés par des fonctions implémentées dans cette partition sont alors commandés selon le deuxième niveau de tolérance qui est moins strict que le premier niveau de tolérance : par conséquent, la commande desdits actionneurs est un peu moins précise, mais davantage robuste (par exemple, le risque de détection d'une défaillance est moins élevé en cas de rafale de vent sur une gouverne).

De façon avantageuse, les actionneurs de l'ensemble d'actionneurs 18 sont répartis dans les deux sous-ensembles d'actionneurs 18a et 18b de telle façon que pour une gouverne de l'aéronef appartenant à un sous-ensemble de gouvernes dites critiques, un premier actionneur associé à cette gouverne fait partie du premier sous-ensemble d'actionneurs 18a et un deuxième actionneur associé à cette gouverne fait partie du deuxième sous-ensemble d'actionneurs 18b. Ainsi, même si un seul des quatre calculateurs principaux est opérationnel à un instant donné, ce calculateur principal peut commander les actionneurs d'un des deux sous-ensembles d'actionneurs 18a, 18b et par conséquent au moins un actionneur de chaque gouverne critique de l'aéronef, de façon à permettre le contrôle de chaque gouverne critique. Le terme gouverne critique désigne ici une gouverne de l'aéronef indispensable pour le contrôle primaire du vol de l'aéronef, en particulier la dérive, les ailerons, la gouverne de profondeur (ou élévateur) et les becs situés à l'avant des ailes. Le terme gouverne critique inclut aussi les freins et la commande d'orientation de la roulette de nez (pour le contrôle au sol), ainsi que les moteurs de propulsion.

De façon avantageuse encore, les actionneurs de l'ensemble d'actionneurs 18 sont répartis dans les deux sous-ensembles d'actionneurs 18a et 18b de telle façon que les actionneurs du premier sous-ensemble d'actionneurs 18a permettent à eux seuls un contrôle en vol et au sol de l'aéronef et les actionneurs du deuxième sous-ensemble d'actionneurs 18b permettent à eux seuls un contrôle en vol et au sol de l'aéronef. En particulier, les actionneurs de chaque ensemble d'actionneurs permettent un contrôle suffisant de l'aéronef selon son axe longitudinal, son axe de roulis et son axe de lacet. Par exemple, chacun des sous-ensembles d'actionneurs 18a et 18b comprend deux ailerons, deux élévateurs, un bec, un plan horizontal, deux paires de spoilers, un actionneur d'une dérive, des actionneurs de freins et une commande des moteurs de propulsion. Ainsi, même si un seul des quatre calculateurs principaux est opérationnel à un instant donné, ce calculateur principal peut commander les actionneurs d'un des deux sous-ensembles d'actionneurs 18a, 18b, ce qui permet un contrôle suffisant de l'aéronef pour permettre son vol et son contrôle au sol.

De façon avantageuse encore, le premier calculateur 10a du premier type matériel, le premier calculateur 10c du deuxième type matériel et ceux des actionneurs du premier sous-ensemble d'actionneurs 18a qui nécessitent une alimentation électrique, sont alimentés par la première alimentation électrique E1. Le deuxième calculateur 10b du premier type matériel, le deuxième calculateur 10d du deuxième type matériel et ceux des actionneurs du deuxième sous-ensemble d'actionneurs 18b qui nécessitent une alimentation électrique, sont alimentés par la deuxième alimentation électrique E2. Ainsi, en cas de panne de l'une des alimentations électriques E1 et E2, un calculateur du premier type matériel, un calculateur du deuxième type matériel et le sous-ensemble d'actionneurs commandés par ces deux calculateurs sont alimentés électriquement et permettent par conséquent le contrôle en vol et au sol de l'aéronef. Même si l'aéronef a décollé avec un calculateur principal en panne, il reste au moins un calculateur principal opérationnel pour commander ledit sous-ensemble d'actionneurs.

Cette première variante de réalisation de l'invention est particulièrement adaptée à un système de commande de vol 20 dans lequel les actionneurs sont en tout ou partie reliés de façon analogique aux calculateurs principaux de commande de vol. Elle n'est toutefois pas exclusive d'un tel mode de réalisation et peut aussi s'appliquer dans le cas d'actionneurs reliés de façon numérique (par exemple via des liaisons de communication de données ou par un réseau de communication) aux calculateurs principaux de commande de vol.

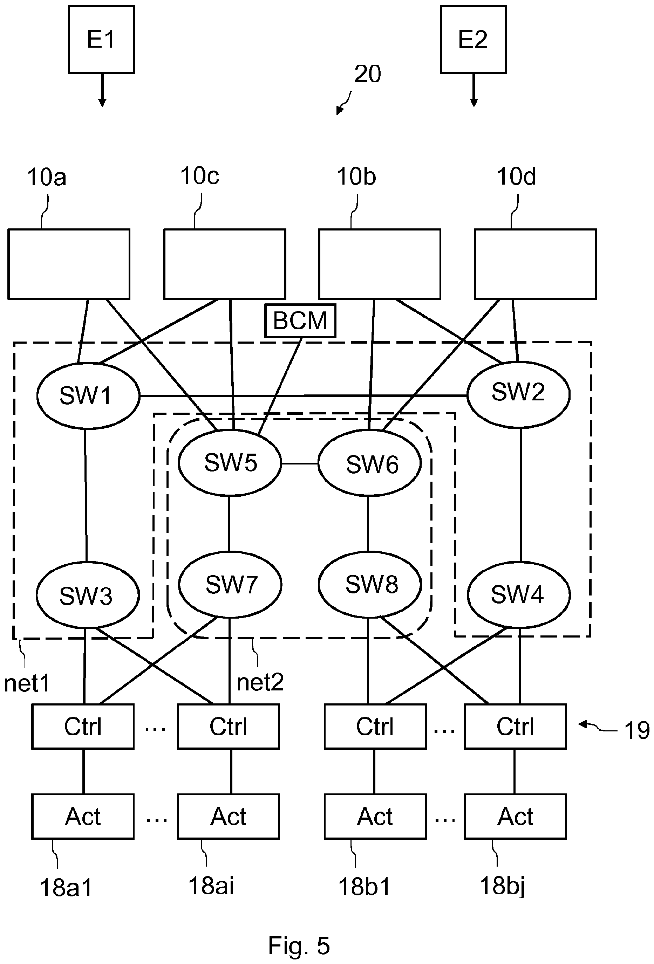

Dans une deuxième variante de réalisation de l'invention, comme représenté sur la figure 5, le système de commande de vol 20 comporte un ensemble de contrôleurs d'actionneurs 19 et deux réseaux de communication net1, net2 indépendants et dissimilaires. Chacun des calculateurs principaux 10a, 10b, 10c, 10d est relié à chacun des deux réseaux de communication net1, net2 et chacun des contrôleurs d'actionneurs 19 est relié à chacun des deux réseaux de communication. L'ensemble des contrôleurs d'actionneurs 19 est prévu pour commander les différents actionneurs 18a1 ... 18ai, 18b1 ... 18bj du système de commande de vol 20. Chaque contrôleur d'actionneur peut commander un ou plusieurs actionneurs. Les contrôleurs d'actionneurs de l'ensemble de contrôleurs d'actionneurs sont de deux types dissimilaires pour garantir la robustesse du système de commande de vol 20. Les deux réseaux de communication net1, net2 sont par exemple des réseaux de type Ethernet commuté déterministe, conformes au standard ARINC 664 part 7. Afin de garantir leur dissimilarité, ces deux réseaux de communication utilisent des équipements (tels que des commutateurs SW1 ... SW8) de types matériels et logiciels différents. Les commutateurs SW1 ... SW4 du premier réseau de communication net1 sont d'un premier type matériel et d'un premier type logiciel, alors que les commutateurs SW5 ... SW8 du deuxième réseau de communication net2 sont d'un deuxième type matériel et d'un deuxième type logiciel. Ainsi, il ne peut pas exister une panne de mode commun aux deux réseaux de communication. Par conséquent, en cas de panne d'un réseau de communication, chacun des calculateurs principaux 10a, 10b, 10c, 10d peut communiquer avec chacun des contrôleurs d'actionneurs 19 par l'autre réseau de communication, puisque chacun des calculateurs principaux est relié à chacun des réseaux de communication et chacun des contrôleurs d'actionneurs est aussi relié à chacun des réseaux de communication.

Dans cette deuxième variante, chacun des calculateurs principaux 10a, 10b, 10c, 10d peut communiquer avec chacun des contrôleurs 19 d'actionneurs et peut par conséquent commander chacun des actionneurs 18a1 ... 18ai, 18b1 ... 18bj de l'ensemble d'actionneurs 18. Ainsi, en cas de reconfiguration du système de commande de vol 20 suite à des défaillances des calculateurs principaux ou à des défaillances dans des partitions des calculateurs principaux, l'un quelconque des calculateurs principaux peut commander tous les actionneurs de l'ensemble d'actionneurs 18.

De façon avantageuse, le premier calculateur principal 10a du premier type matériel, le premier calculateur principal 10c du deuxième type matériel, un premier sous-ensemble d'équipements SW1, SW3 du premier réseau de communication net1 et un premier sous-ensemble d'équipements SW5, SW7 du deuxième réseau de communication net2 auquel sont reliés ces deux calculateurs principaux 10a et 10c sont alimentés par la première alimentation électrique E1. Ceux qui nécessitent une alimentation électrique parmi les actionneurs d'un premier sous-ensemble d'actionneurs 18a1 ... 18ai reliés au premier sous-ensemble d'équipements SW1, SW3 du premier réseau de communication net1 et au premier sous-ensemble d'équipements SW5, SW7 du deuxième réseau de communication net2 sont aussi alimentés par la première alimentation électrique E1, de même que les contrôleurs d'actionneurs correspondants 19. De façon similaire, le deuxième calculateur principal 10b du premier type matériel, le deuxième calculateur principal 10d du deuxième type matériel, un deuxième sous-ensemble d'équipements SW2, SW4 du premier réseau de communication net1 et un deuxième sous-ensemble d'équipements SW6, SW8 du deuxième réseau de communication net2 auquel sont reliés ces deux calculateurs principaux 10b et 10d sont alimentés par la deuxième alimentation électrique E2. Ceux qui nécessitent une alimentation électrique parmi les actionneurs d'un deuxième sous-ensemble d'actionneurs 18b1 ... 18bj reliés au deuxième sous-ensemble d'équipements SW2, SW4 du premier réseau de communication net1 et au deuxième sous-ensemble d'équipements SW6, SW8 du deuxième réseau de communication net2 sont aussi alimentés par la deuxième alimentation électrique E2, de même que les contrôleurs d'actionneurs correspondants 19. Ainsi, en cas de panne de l'alimentation électrique E1, le calculateur principal 10b du premier type matériel et le calculateur principal 10d du deuxième type matériel peuvent communiquer avec les contrôleurs des actionneurs du deuxième sous-ensemble d'actionneurs 18b1 ... 18bj de façon à contrôler ces actionneurs. De même, en cas de panne de l'alimentation électrique E2, le calculateur principal 10a du premier type matériel et le calculateur principal 10c du deuxième type matériel peuvent communiquer avec les contrôleurs des actionneurs du premier sous-ensemble d'actionneurs 18a1 ... 18ai de façon à contrôler ces actionneurs. Par conséquent, dans la mesure où les actionneurs 18 sont répartis entre les deux sous-ensembles d'actionneurs comme indiqué précédemment, en cas d'une panne d'une alimentation électrique E1 ou E2, le système de commande de vol 20 peut continuer à contrôler l'aéronef en vol et au sol.

Dans l'ensemble des modes de réalisation, le calculateur de secours 17 est prévu pour mettre en œuvre un contrôle robuste de l'aéronef, selon des lois de contrôle simplifiées, en cas de défaillance de l'ensemble des calculateurs principaux, le temps de réinitialiser les calculateurs principaux. Ce calculateur de secours 17 est similaire aux calculateurs de secours de l'art antérieur. Après réinitialisation des calculateurs principaux, ceux d'entre eux qui sont fonctionnels peuvent reprendre leur fonction de contrôle du vol de l'aéronef.

## Revendications

1. - Système de commande de vol (20) d'un aéronef, comprenant un ensemble (18) d'actionneurs de contrôle de l'aéronef, et un ensemble de calculateurs de commande de vol prévus pour commander les actionneurs de l'ensemble d'actionneurs:
l'ensemble de calculateurs de commande de vol est constitué d'un ensemble de calculateurs dits principaux (10a, 10b, 10c, 10d) et d'au moins un calculateur de secours (17),
- chacun des calculateurs principaux est de type duplex, comprenant deux modules (10com, 10mon) agissant respectivement en mode commande (COM) et en mode moniteur (MON) ;
- tous les calculateurs principaux (10a, 10b, 10c, 10d) sont configurés pour mettre en œuvre des lois de pilotage automatique de l'aéronef ;
- l'ensemble de calculateurs principaux comprend deux calculateurs (10a, 10b) d'un premier type matériel, ces calculateurs étant configurés pour contrôler des actionneurs de l'ensemble d'actionneurs selon un premier niveau de tolérance ; et **caractérisé en ce que**:
- l'ensemble de calculateurs principaux comprend deux calculateurs (10c, 10d) d'un deuxième type matériel, dissimilaire du premier type matériel, ces calculateurs étant configurés pour contrôler des actionneurs de l'ensemble d'actionneurs selon un deuxième niveau de tolérance, moins strict que le premier niveau de tolérance,
dans lequel, pour un calculateur principal, le niveau de tolérance correspond à un écart autorisé entre d'une part des ordres déterminés par le module agissant en mode commande (COM) et d'autre part des ordres correspondants déterminés par le module agissant en mode moniteur (MON) et, tant que l'écart entre les ordres déterminés respectivement par le module agissant en mode commande et par le module agissant en mode moniteur est inférieur à cet écart autorisé, le module agissant en mode moniteur (MON) ne détecte pas d'erreur et le calculateur principal reste opérationnel et, lorsque cet écart est supérieur à l'écart autorisé, le module agissant en mode moniteur (MON) détecte une défaillance du calculateur.

2. - Système selon la revendication 1, **caractérisé en ce que** :
- chacun des calculateurs principaux comporte au moins une première partition logicielle et une deuxième partition logicielle, la première partition logicielle (12) comprenant des fonctions de pilotage automatique de l'aéronef et la deuxième partition logicielle (13) comprenant des fonctions de commande d'actionneurs de l'ensemble d'actionneurs ; et
- pour chacun des calculateurs principaux, le module (MON) agissant en mode moniteur est configuré pour surveiller le module (COM) agissant en mode commande de façon indépendante pour chacune des partitions, afin de permettre la désactivation des partitions de façon indépendante les unes des autres.

3. - Système selon l'une quelconque des revendications précédentes, **caractérisé en ce que** les différents calculateurs de l'ensemble de calculateurs principaux (10a, 10b, 10c, 10d) correspondent à des calculateurs modulaires.

4. - Système selon l'une quelconque des revendications précédentes, **caractérisé en ce que** l'ensemble d'actionneurs (18) inclut au moins l'un des sous-ensembles d'actionneurs suivants :
- un sous-ensemble d'actionneurs de gouvernes de contrôle primaire du vol de l'aéronef ;
- un sous-ensemble d'actionneurs comprenant les actionneurs des becs et/ou des volets de l'aéronef ;
- un sous-ensemble d'actionneurs prévus pour assurer le contrôle du freinage et du guidage au sol de l'aéronef ;
- un sous-ensemble d'actionneurs correspondant aux moteurs de propulsion de l'aéronef.

5. - Système selon la revendication 4, **caractérisé en ce que** chacun des calculateurs principaux comporte une partition logicielle distincte (13, 14, 15, 16) associée à chaque sous-ensemble d'actionneurs et le module agissant en mode moniteur est configuré pour surveiller le module agissant en mode commande de façon indépendante pour chacune des partitions, afin de permettre la désactivation des partitions de façon indépendante les unes des autres.

6. - Système selon l'une quelconque des revendications précédentes, **caractérisé en ce qu'**un premier (10a) des deux calculateurs du premier type matériel et un premier (10c) des deux calculateurs du deuxième type matériel sont alimentés par une première alimentation électrique (E1) et un deuxième (10b) des deux calculateurs du premier type matériel et un deuxième (10d) des deux calculateurs du deuxième type matériel sont alimentés par une deuxième alimentation électrique (E2) indépendante de la première alimentation électrique.

7. - Système selon l'une quelconque des revendications précédentes, **caractérisé en ce qu'**un premier (10a) des deux calculateurs du premier type matériel et un premier (10c) des deux calculateurs du deuxième type matériel sont configurés pour commander un premier sous-ensemble d'actionneurs (18a) de l'ensemble d'actionneurs et un deuxième (10b) des deux calculateurs du premier type matériel et un deuxième (10d) des deux calculateurs du deuxième type matériel sont configurés pour commander un deuxième sous-ensemble d'actionneurs (18b) de l'ensemble d'actionneurs, disjoint du premier sous-ensemble d'actionneurs (18a).

8. - Système selon la revendication 7, **caractérisé en ce que** les actionneurs de l'ensemble d'actionneurs (18) sont répartis entre le premier sous-ensemble d'actionneurs (18a) et le deuxième sous-ensemble d'actionneurs (18b) de telle façon que pour une gouverne de l'aéronef appartenant à un sous-ensemble de gouvernes dites critiques, un premier actionneur associé à cette gouverne fait partie du premier sous-ensemble d'actionneurs et un deuxième actionneur associé à cette gouverne fait partie du deuxième sous-ensemble d'actionneurs.

9. - Système selon l'une des revendications 7 ou 8, **caractérisé en ce que** les différents actionneurs de l'ensemble d'actionneurs sont répartis entre le premier sous-ensemble d'actionneurs (18a) et le deuxième sous-ensemble d'actionneurs (18b) de telle façon que les actionneurs du premier sous-ensemble d'actionneurs permettent à eux seuls un contrôle du vol de l'aéronef et les actionneurs du deuxième sous-ensemble d'actionneurs permettent à eux seuls un contrôle du vol de l'aéronef.

10. - Système selon l'une quelconque des revendications 1 à 6, **caractérisé en ce qu'**il comprend en outre :
- un ensemble de contrôleurs d'actionneurs (19) ; et
- deux réseaux de communication (net1, net2) indépendants et dissimilaires, dans lequel chaque actionneur de l'ensemble d'actionneurs est commandé par un contrôleur d'actionneurs de l'ensemble de contrôleurs d'actionneurs, chacun des calculateurs principaux est relié à chacun des deux réseaux de communication et chacun des contrôleurs d'actionneurs est relié à chacun des deux réseaux de communication.

11. - Système selon la revendication 10, **caractérisé en ce que** chacun des deux réseaux de communication (net1, net2) comprenant un ensemble d'équipements de communication requérant une alimentation électrique pour leur fonctionnement, une première partie des équipements de communication de chaque réseau de communication est alimentée par une première alimentation électrique (E1) et une deuxième partie des équipements de communication de chaque réseau de communication est alimentée par une deuxième alimentation électrique (E2) indépendante de la première alimentation électrique.

12. - Système selon l'une quelconque des revendications précédentes, **caractérisé en ce que** l'ensemble de calculateurs principaux comprend uniquement lesdits deux calculateurs du premier type matériel (10a, 10b) et lesdits deux calculateurs du deuxième type matériel (10c, 10d).

13. - Système selon l'une quelconque des revendications précédentes, **caractérisé en ce que** pour chaque calculateur de l'ensemble de calculateurs principaux (10a, 10b, 10c, 10d), les deux modules agissant respectivement en mode commande (COM) et en mode moniteur (MON) sont des modules similaires, tant du point de vue matériel que du point de vue logiciel.

14. - Aéronef (1) comprenant un système de commande de vol (20) selon l'une quelconque des revendications précédentes.

## Patentansprüche

1. Flugsteuerungssystem (20) eines Luftfahrzeugs, das einen Satz (18) von Aktoren zur Steuerung des Luftfahrzeugs und einen Satz von Flugsteuerungsrechnern umfasst, die zur Steuerung der Aktoren des Satzes von Aktoren vorgesehen sind:
wobei der Satz von Flugsteuerungsrechnern von einem Satz von Hauptrechnern (10a, 10b, 10c, 10d) und wenigstens einem Ersatzrechner (17) gebildet ist,
- jeder der Hauptrechner vom Duplextyp ist, umfassend zwei Module (10com, 10mon), die im Befehlsmodus (COM) bzw. im Wächtermodus (MON) wirken;
- alle Hauptrechner (10a, 10b, 10c, 10d) dazu ausgebildet sind, Gesetze automatischer Steuerung des Luftfahrzeugs umzusetzen;
- der Satz von Hauptrechnern zwei Rechner (10a, 10b) von einem ersten Hardwaretyp umfasst, wobei diese Rechner dazu ausgebildet sind, die Aktoren des Satzes von Aktoren gemäß einem ersten Toleranzniveau zu steuern; und **dadurch gekennzeichnet, dass**:
- der Satz von Hauptrechnern zwei Rechner (10c, 10d) von einem zweiten Hardwaretyp umfasst, der sich von dem ersten Hardwaretyp unterscheidet, wobei diese Rechner dazu ausgebildet sind, Aktoren des Satzes von Aktoren gemäß einem zweiten Toleranzniveau zu steuern, das weniger streng als das erste Toleranzniveau ist,
wobei für einen Hauptrechner das Toleranzniveau einer erlaubten Abweichung zwischen einerseits Befehlen, die von dem im Befehlsmodus (COM) wirkenden Modul bestimmt werden, und andererseits entsprechenden Befehlen, die von dem im Wächtermodus (MON) wirkenden Modul bestimmt werden, entspricht, und, solange die Abweichung zwischen den Befehlen, die von dem im Befehlsmodus wirkenden Modul bzw. von dem im Wächtermodus wirkenden Modul bestimmt werden, kleiner als diese erlaubte Abweichung ist, das im Wächtermodus (MON) wirkende Modul keinen Fehler detektiert und der Hauptrechner betriebsbereit bleibt, und, wenn diese Abweichung größer als die erlaubte Abweichung ist, das im Wächtermodus (MON) wirkende Modul einen Ausfall des Rechners detektiert.

2. System nach Anspruch 1, **dadurch gekennzeichnet, dass**:
- jeder der Hauptrechner wenigstens eine erste Softwarepartition und eine zweite Softwarepartition aufweist, wobei die erste Softwarepartition (12) Funktionen zur automatischen Steuerung des Luftfahrzeugs und die zweite Softwarepartition (13) Funktionen zur Steuerung von Aktoren des Satzes von Aktoren umfasst; und
- für jeden der Hauptrechner das im Wächtermodus wirkende Modul (MON) dazu ausgebildet ist, das im Befehlsmodus wirkende Modul (COM) unabhängig für jede der Partitionen zu überwachen, um die Deaktivierung der Partitionen unabhängig voneinander zu ermöglichen.

3. System nach einem der vorhergehenden Ansprüche, **dadurch gekennzeichnet, dass** die verschiedenen Rechner des Satzes von Hauptrechnern (10a, 10b, 10c, 10d) modularen Rechnern entsprechen.

4. System nach einem der vorhergehenden Ansprüche, **dadurch gekennzeichnet, dass** der Satz von Aktoren (18) wenigstens einen der folgenden Teilsätze von Aktoren enthält:
- einen Teilsatz von Aktoren von Steuerflächen zur Primärsteuerung des Flugs des Luftfahrzeugs;
- einen Teilsatz von Aktoren, der die Aktoren der Vorflügel und/oder Klappen des Luftfahrzeugs umfasst;
- einen Teilsatz von Aktoren, die zur Sicherstellung der Steuerung der Bremsung und der Lenkung des Luftfahrzeugs am Boden vorgesehen sind;
- einen Teilsatz von Aktoren, die den Antriebsmotoren des Luftfahrzeugs entsprechen.

5. System nach Anspruch 4, **dadurch gekennzeichnet, dass** jeder der Hauptrechner eine gesonderte Softwarepartition (13, 14, 15, 16) aufweist, die jedem Teilsatz von Aktoren zugeordnet ist, und das im Wächtermodus wirkende Modul dazu ausgebildet ist, das im Befehlsmodus wirkende Modul unabhängig für jede der Partitionen zu überwachen, um die Deaktivierung der Partitionen unabhängig voneinander zu ermöglichen.

6. System nach einem der vorhergehenden Ansprüche, **dadurch gekennzeichnet, dass** ein erster (10a) der zwei Rechner vom ersten Hardwaretyp und ein erster (10c) der zwei Rechner vom zweiten Hardwaretyp von einer ersten Stromversorgung (E1) versorgt werden und ein zweiter (10b) der zwei Rechner vom ersten Hardwaretyp und ein zweiter (10d) der zwei Rechner vom zweiten Hardwaretyp von einer zweiten Stromversorgung (E2), die von der ersten Stromversorgung unabhängig ist, versorgt werden.

7. System nach einem der vorhergehenden Ansprüche, **dadurch gekennzeichnet, dass** ein erster (10a) der zwei Rechner vom ersten Hardwaretyp und ein erster (10c) der zwei Rechner vom zweiten Hardwaretyp dazu ausgebildet sind, einen ersten Teilsatz von Aktoren (18a) des Satzes von Aktoren zu steuern, und ein zweiter (10b) der zwei Rechner vom ersten Hardwaretyp und ein zweiter (10d) der zwei Rechner vom zweiten Hardwaretyp dazu ausgebildet sind, einen zweiten Teilsatz von Aktoren (18b) des Satzes von Aktoren, der von dem ersten Teilsatz von Aktoren (18a) getrennt ist, zu steuern.

8. System nach Anspruch 7, **dadurch gekennzeichnet, dass** die Aktoren des Satzes von Aktoren (18) so auf den ersten Teilsatz von Aktoren (18a) und den zweiten Teilsatz von Aktoren (18b) verteilt sind, dass für eine Steuerfläche des Luftfahrzeugs, die zu einem Teilsatz von kritischen Steuerflächen gehört, ein erster Aktor, der dieser Steuerfläche zugeordnet ist, zum ersten Teilsatz von Aktoren gehört, und ein zweiter Aktor, der dieser Steuerfläche zugeordnet ist, zum zweiten Teilsatz von Aktoren gehört.

9. System nach einem der Ansprüche 7 oder 8, **dadurch gekennzeichnet, dass** die verschiedenen Aktoren des Satzes von Aktoren so auf den ersten Teilsatz von Aktoren (18a) und den zweiten Teilsatz von Aktoren (18b) verteilt sind, dass die Aktoren des ersten Teilsatzes von Aktoren allein eine Steuerung des Flugs des Luftfahrzeugs ermöglichen und die Aktoren des zweiten Teilsatzes von Aktoren allein eine Steuerung des Flugs des Luftfahrzeugs ermöglichen.

10. System nach einem der Ansprüche 1 bis 6, **dadurch gekennzeichnet, dass** es ferner Folgendes umfasst:
- einen Satz von Aktorensteuerungen (19); und
- zwei unabhängige und unterschiedliche Kommunikationsnetze (net1, net2), wobei jeder Aktor des Satzes von Aktoren von einer Aktorensteuerung des Satzes von Aktorensteuerungen gesteuert wird, wobei jeder der Hauptrechner mit jedem der zwei Kommunikationsnetze und jede der Aktorensteuerungen mit jedem der zwei Kommunikationsnetze verbunden ist.

11. System nach Anspruch 10, **dadurch gekennzeichnet, dass**, jedes der zwei Kommunikationsnetze (net1, net2) einen Satz von Kommunikationseinrichtungen umfassend, die eine Stromversorgung für ihren Betrieb erfordern, ein erster Anteil der Kommunikationseinrichtungen jedes Kommunikationsnetzes von einer ersten Stromversorgung (E1) versorgt wird und ein zweiter Anteil der Kommunikationseinrichtungen jedes Kommunikationsnetzes von einer zweiten Stromversorgung (E2) versorgt wird, die von der ersten Stromversorgung unabhängig ist.

12. System nach einem der vorhergehenden Ansprüche, **dadurch gekennzeichnet, dass** der Satz von Hauptrechnern nur die zwei Rechner vom ersten Hardwaretyp (10a, 10b) und die zwei Rechner vom zweiten Hardwaretyp (10c, 10d) umfasst.

13. System nach einem der vorhergehenden Ansprüche, **dadurch gekennzeichnet, dass** für jeden Rechner des Satzes von Hauptrechnern (10a, 10b, 10c, 10d) die zwei Module, die im Befehlsmodus (COM) bzw. im Wächtermodus (MON) wirken, sowohl im Hinblick auf die Hardware als auch die Software ähnliche Module sind.

14. Luftfahrzeug (1) umfassend ein Flugsteuerungssystem (20) nach einem der vorhergehenden Ansprüche.

## Claims

1. Flight control system (20) for an aircraft, comprising a set (18) of actuators for controlling the aircraft and a set of flight control computers designed to control the actuators of the set of actuators,
the set of flight control computers is made up of a set of computers, called main computers (10a, 10b, 10c, 10d), and of at least one backup computer (17),
- each of the main computers is of the duplex type, comprising two modules (10com, 10mon) respectively acting in control mode (COM) and in monitor mode (MON);
- all the main computers (10a, 10b, 10c, 10d) are configured to implement auto-pilot laws for the aircraft;
- the set of main computers comprises two computers (10a, 10b) from a first hardware type, these computers being configured to control actuators of the set of actuators as per a first tolerance level; and **characterized in that**:
- the set of main computers comprises two computers (10c, 10d) from a second hardware type, different from the first hardware type, these computers being configured to control actuators of the set of actuators as per a second tolerance level, less stringent than the first tolerance level,
wherein, for a main computer, the tolerance level corresponds to an authorized difference between, on the one hand, orders determined by the module acting in control mode (COM) and, on the other hand, corresponding orders determined by the module acting in monitor mode (MON) and, for as long as the difference between the orders determined respectively by the module acting in control mode and by the module acting in monitor mode is less than this authorized difference, the module acting in monitor mode (MON) does not detect an error and the main computer remains operational and, when this difference is greater than the authorized difference, the module acting in monitor mode (MON) detects failure of the computer.

2. System according to Claim 1, **characterized in that**:
- each of the main computers comprises at least one first software partition and one second software partition, the first software partition (12) comprising functions for automatically piloting the aircraft and the second software partition (13) comprising functions for controlling actuators of the set of actuators; and
- for each of the main computers, the module (MON) acting in monitor mode is configured to monitor the module (COM) acting in control mode independently for each of the partitions, so as to allow the partitions to be deactivated independently of one another.

3. System according to either one of the preceding claims, **characterized in that** the various computers of the set of main computers (10a, 10b, 10c, 10d) correspond to modular computers.

4. System according to any one of the preceding claims, **characterized in that** the set (18) of actuators includes at least one of the following sub-sets of actuators:
- a sub-set of actuators for rudders for primary control of the flight of the aircraft;
- a sub-set of actuators comprising the actuators of the slats and/or flaps of the aircraft;
- a sub-set of actuators designed to control the braking and the ground-based steering of the aircraft;
- a sub-set of actuators corresponding to the propulsion engines of the aircraft.

5. System according to Claim 4, **characterized in that** each of the main computers comprises a separate software partition (13, 14, 15, 16) associated with each sub-set of actuators and the module acting in monitor mode is configured to monitor the module acting in control mode independently for each of the partitions, so as to allow the partitions to be deactivated independently of one another.

6. System according to any one of the preceding claims, **characterized in that** a first (10a) one of the two computers of the first hardware type and a first (10c) one of the two computers of the second hardware type are powered by a first electrical power supply (E1), and a second (10b) one of the two computers of the first hardware type and a second (10d) one of the two computers of the second hardware type are powered by a second electrical power supply (E2) independent of the first electrical power supply.

7. System according to any one of the preceding claims, **characterized in that** a first (10a) one of the two computers of the first hardware type and a first (10c) one of the two computers of the second hardware type are configured to control a first sub-set (18a) of actuators of the set of actuators and a second (10b) one of the two computers of the first hardware type and a second (10d) one of the two computers of the second hardware type are configured to control a second sub-set (18b) of actuators of the set of actuators, separate from the first sub-set (18a) of actuators.

8. System according to Claim 7, **characterized in that** the actuators of the set (18) of actuators are distributed between the first sub-set (18a) of actuators and the second sub-set (18b) of actuators in such a way that, for a rudder of the aircraft belonging to a sub-set of rudders referred to as critical rudders, a first actuator associated with this rudder forms part of the first sub-set of actuators and a second actuator associated with this rudder forms part of the second sub-set of actuators.

9. System according to either of Claims 7 and 8, **characterized in that** the various actuators of the set of actuators are distributed between the first sub-set (18a) of actuators and the second sub-set (18b) of actuators in such a way that the actuators of the first sub-set of actuators alone allow the flight of the aircraft to be controlled and the actuators of the second sub-set of actuators alone allow the flight of the aircraft to be controlled.

10. System according to any one of Claims 1 to 6, **characterized in that** it further comprises:
- a set (19) of actuator controllers; and
- two independent and different communication networks (net1, net2), wherein each actuator of the set of actuators is controlled by an actuator controller of the set of actuator controllers, each of the main computers is connected to each of the two communication networks and each of the actuator controllers is connected to each of the two communication networks.

11. System according to Claim 10, **characterized in that**, with each of the two communication networks (net1, net2) comprising a set of communication equipment requiring an electrical power supply in order to operate, a first part of the communication equipment of each communication network is powered by a first electrical power supply (E1) and a second part of the communication equipment of each communication network is powered by a second electrical power supply (E2) independent of the first electrical power supply.

12. System according to any one of the preceding claims, **characterized in that** the set of main computers only comprises said two computers of the first hardware type (10a, 10b) and said two computers of the second hardware type (10c, 10d).

13. System according to any one of the preceding claims, **characterized in that**, for each computer of the set of main computers (10a, 10b, 10c, 10d), the two modules respectively acting in control mode (COM) and in monitor mode (MON) are similar modules, both in terms of hardware and in terms of software.

14. Aircraft (1) comprising a flight control system (20) according to any one of the preceding claims.
